# EUROPÄISCHE PATENTSCHRIFT

(11) **EP 3 103 345 B1**
(45) Veröffentlichungstag und Bekanntmachung des Hinweises auf die Patenterteilung: **27.02.2019**
(21) Anmeldenummer: 15171027.4
(22) Anmeldetag: 08.06.2015
(51) Int. Cl.: A21B 5/02, A21B 1/48, A21B 1/26, A21B 3/04

(54) **BACKOFEN MIT EINEM KONVEKTIONSGEBLÄSE**
BAKING OVEN WITH A CONVECTION FAN
FOUR DE CUISSON DOTÉ D'UN VENTILATEUR DE CONVECTION

(43) Veröffentlichungstag der Anmeldung: 14.12.2016
(73) Patentinhaber: Haas Food Equipment GmbH, 1210 Wien (AT)
(72) Erfinder: HAAS, Johannes, 1040 Wien (AT); HAAS, Josef, 2100 Leobendorf (AT); JIRASCHEK, Stefan, 2202 Königsbrunn (AT); SCHELLER, Markus, 2004 Bruderndorf (AT)
(74) Vertreter: Puchberger & Partner Patentanwälte

(56) Entgegenhaltungen:
- WO-A1-2015/165868
- AT-A4- 515 106
- US-A- 2 624 297
- US-A- 4 648 314
- US-A- 5 787 800
- US-A1- 2012 121 771

## Beschreibung

Die Erfindung betrifft einen Backofen gemäß Oberbegriff des unabhängigen Patentanspruchs.

Backöfen, insbesondere Backöfen zur industriellen Herstellung von gebackenen Produkten, wie beispielsweise zur industriellen Herstellung von Waffeln, sind in unterschiedlichen Ausführungsformen bekannt und publiziert.

Beispielsweise sind sogenannte Backzangenöfen bekannt, bei denen öffen- und schließbare Backzangen kontinuierlich entlang einem Endlosförderer befördert werden. Die Backzangen werden dabei entlang des Verlaufs des Endlosförderers durch einen Backraum und durch einen vom Backraum im Wesentlichen abgetrennten Vorkopf des Backofens befördert. In diesem Vorkopf werden die Backzangen aufgeklappt, dann wird das gebackene Produkt entnommen, dann werden die Backzangen ein weiteres Mal mit einem Teig oder einer Backmasse beschickt, wieder zugeklappt und in weiterer Folge ein weiteres Mal durch den Backraum befördert.

Zur Verbesserung der Effizienz von industriellen Backöfen ist es bekannt, die Wände des Backraums vollflächig mit einer Wärmeisolierung zu versehen. Dadurch kann der Wärmeverlust verringert werden.

Gemäß neueren Entwicklungen werden zur Beheizung des Backraums ergänzend zu einfachen Gasbrennern oder statt einfachen Gasbrennern Strahlungsbrenner verwendet. Zur weiteren Verbesserung ist es auch bekannt, den Backraum im Wesentlichen geschlossen auszuführen. Dies bedeutet, dass im Unterschied zu herkömmlichen Backöfen auch die Unterseite des Backraums geschlossen und bevorzugt mit einer Wärmeisolierung versehen ist.

Bei einer Kombination aus geschlossenem Backraum und effizienter Heizvorrichtung kann es vorkommen, dass die beispielsweise ausschließlich mit Primärluft betriebenen Strahlungsbrenner zu wenig Gas- oder Luftdurchsatz erzeugen, womit keine ausreichende Durchströmung des Brennraums gegeben ist.

Backöfen sind beispielsweise aus der US 5,787,800 A, der US 2012/121771 A, der AT 515 106 A4 und der US 4,648,314 A bekannt.

Aus der angeführten US 5,787,800 A ist ein Ofen und ein Verfahren für das Backen von Backformteilen durch Luftbeheizung bekannt, wobei kombinierte Lüfter-/Heizvorrichtungen für die Beheizung als auch die Erzeugung einer Strömung verwendet werden.

Aus der angeführten US 4,648,314 A ist eine automatische Waffelbackmaschine bekannt, wobei in der Nähe des hinteren Umlenkpunkts des Backofens Luft eingebracht und abgezogen wird, wodurch eine unkontrollierte Strömung im Backraum entsteht.

Der Erfindung liegt nun die Aufgabe zugrunde herkömmliche Backöfen zu verbessern. Dies umfasst insbesondere, dass die Energieeffizienz des Backofens verbessert wird. Darüber hinaus kann durch die vorliegende Erfindung jedoch auch die Backqualität verbessert werden.

Die erfindungsgemäße Aufgabe wird insbesondere durch die Merkmalskombination des unabhängigen Patentanspruchs gelöst.

Gegebenenfalls betrifft die Erfindung einen Backofen zum Herstellen gebackener, bevorzugt essbarer, Produkte, umfassend mehrere entlang einem Endlosförderer vorgesehene öffenbare und schließbare Backzangen, die aneinandergereiht jeweils nacheinander:
- einen Backmassenauftragsbereich zum Auftrag einer Backmasse auf eine geöffnete Backzange,
- einen Schließbereich zum Schließen der Backzangen,
- einen Backraum zum Backen der Backprodukte in den geschlossenen Backzangen,
- einen Öffenbereich zum Öffnen der Backzangen
- und einen Backproduktentnahmebereich zur Entnahme der gebackenen Produkte aus den geöffneten Backzangen durchlaufen,
wobei der Endlosförderer und die Backzangen an einem im Backraum angeordneten hinteren Umlenkpunkt und an einem entfernt vom Backraum in einem Vorkopf angeordneten vorderen Umlenkpunkt umgelenkt sind, wobei der Backraum als im Wesentlichen geschlossener Backraum mit einer Wärmeisolierung ausgebildet ist, der

eine Eintrittsöffnung zum Eintritt der Backzangen, eine Austrittsöffnung zum Austritt der Backzangen und einen Abzug zur Abführung der Backraumgase umfasst, und wobei mindestens ein Konvektionsgebläse vorgesehen ist, das entfernt vom Abzug in den Backraum mündet.

Erfindungsgemäß ist vorgesehen, dass das Konvektionsgebläse ein Luftgebläse ist, über das, zur Erzeugung künstlicher Konvektion, gesteuert oder geregelt Sekundärluft, insbesondere ausschließlich Sekundärluft in den Backraum einbringbar ist.

Gegebenenfalls ist vorgesehen, dass das Konvektionsgebläse und dessen Konvektionsströmung im Bereich des hinteren Umlenkpunktes oder durch die hintere Stirnwand des Backraums in den Backraum münden.

Gegebenenfalls ist vorgesehen, dass das Konvektionsgebläse und dessen Konvektionsströmung im Bereich des hinteren Umlenkpunktes oder durch die hintere Stirnwand des Backraums in den Backraums münden.

Erfindungsgemäß ist vorgesehen, dass die Konvektionsströmung im Backraum entlang der Hauptbewegungsrichtung der Backzangen und insbesondere im Wesentlichen waagrecht verläuft, bevor sie aus dem Abzug austritt.

Erfindungsgemäß ist in allen Ausführungsformen vorgesehen, dass entlang der Konvektionsströmung des Konvektionsgebläses zuerst die Einmündung des Konvektionsgebläses in den Backraum, dann der Bereich des Backraums, in dem die Heizanordnung vorgesehen ist, und dann der Abzug durchströmt werden oder angeordnet sind.

Gegebenenfalls ist vorgesehen, dass zwischen dem oder einem Bereich, in dem die oder eine Heizanordnung vorgesehen ist, und einem oder dem Abzug ein Konvektionsbereich vorgesehen ist, in dem keine Heizanordnung vorgesehen ist.

Erfindungsgemäß ist vorgesehen, dass der Abzug, entlang der Hauptbewegungsrichtung der Backzangen gesehen, entfernt vom hinteren Umlenkpunkt auf der anderen Seite des Backraums und insbesondere nahe dem Vorkopf in den Backraum mündet.

Gegebenenfalls ist vorgesehen, dass in dem Backraum mindestens eine Heizanordnung zur Beheizung der im Backraum befindlichen Backzangen vorgesehen ist.

Gegebenenfalls ist vorgesehen, dass die Heizanordnung eine Strahlungsheizvorrichtung enthält oder ist, wobei die Strahlungsheizvorrichtung insbesondere ein Drahtgewebebrenner oder ein Porenbrenner ist.

Gegebenenfalls ist vorgesehen, dass die Heizanordnung eine Strahlungsheizvorrichtung enthält oder ist, wobei die Strahlungsheizvorrichtung insbesondere ein Drahtgewebebrenner oder ein Porenbrenner ist, und dass die Strahlungsheizvorrichtung einen Verbrennungsbereich zur Verbrennung eines vorgemischten Luft-Brennstoff-Gemisches umfasst, wobei die Luft des Luft-Brennstoff-Gemisches insbesondere die Primärluft zur Verbrennung des Brennstoffs ist. Gegebenenfalls ist vorgesehen, dass ein Abzuggebläse zur Absaugung des Backraumgases durch den Abzug vorgesehen ist. Gegebenenfalls ist vorgesehen, dass zwei oder mehr Konvektionsgebläse vorgesehen sind, die getrennt voneinander an unterschiedlichen Stellen in den Backraum münden. Gegebenenfalls ist vorgesehen, dass zwei oder mehr Konvektionsgebläse vorgesehen sind, die getrennt voneinander an unterschiedlichen Stellen im Bereich des hinteren Umlenkpunktes oder durch die hintere Stirnwand des Backraums in den Backraum münden.

Gegebenenfalls ist vorgesehen, dass eine Luftaufbereitungsanordnung vorgesehen ist, die eine Luftvorwärmung, eine Luftfilterung, eine Luftbefeuchtung und/oder eine Luftentfeuchtung umfasst.

Gegebenenfalls ist vorgesehen, dass eine Regelungsanordnung zur Regelung der Temperatur der zugeführten Luft, zur Regelung der Temperatur der abgeführten Backraumgase, zur Regelung der Backraumfeuchtigkeit und/oder zur Regelung der Backraumtemperatur vorgesehen ist.

Gegebenenfalls ist vorgesehen, dass eine Regelungsanordnung oder eine Steuerungsanordnung zur Regelung oder Steuerung des Volumenstroms des oder der Konvektionsgebläse(s) vorgesehen ist.

Gegebenenfalls ist vorgesehen, dass eine Regelungsanordnung oder eine Steuerungsanordnung zur Regelung oder Steuerung der Heizleistung der Heizanordnung vorgesehen ist.

Gegebenenfalls ist vorgesehen, dass eine Regelungsanordnung vorgesehen ist, und dass die Regelungsanordnung mindestens einen Sensor, wie insbesondere einen Temperatursensor, einen Drucksensor, einen Feuchtigkeitssensor und/oder einen Sensor zur Bestimmung eines Volumenstroms der Konvektionsströmung des Konvektionsgebläses oder der Konvektionsgebläse umfasst.

Gegebenenfalls ist vorgesehen, dass zwei oder mehr Konvektionsgebläse vorgesehen sind, die getrennt voneinander an unterschiedlichen Stellen in den Backraum münden, und dass die Konvektionsgebläse getrennt steuerbar oder getrennt regelbar sind.

Gegebenenfalls ist vorgesehen, dass zwischen dem Backraum und dem Vorkopf eine Wand oder eine wärmeisolierte Wand vorgesehen ist, durch die der Backraum vom Vorkopf im Wesentlichen abgetrennt ist, wobei die Wand eine Eintrittsöffnung und eine Austrittsöffnung zur Durchführung der Backplatten aufweist, und wobei die Öffnungen bevorzugt so klein wie möglich ausgestaltet sind, sodass ein Austritt des Backraumgases in den Vorkopf weitestgehend minimiert ist.

Bevorzugt umfasst der Backofen mindestens ein Konvektionsgebläse. Dieses Konvektionsgebläse erzeugt einen Gasstrom, insbesondere eine Konvektionsströmung im Inneren des Backraums. Durch diesen Gasstrom oder die Konvektionsströmung kann einerseits die in den Backraums eingebrachte Wärme besser genützt werden. Darüber hinaus wird die Wärme durch die Konvektionsströmung besser im Backraum verteilt, wodurch die Backqualität verbessert wird.

Gegebenenfalls ist vorgesehen, dass die Konvektionsströmung im Wesentlichen entlang der Hauptbewegungsrichtung der Backzangen verläuft. Gemäß einer bevorzugten Ausführungsform werden die Backzangen entlang zweier im Wesentlichen waagrecht verlaufender Flächen durch den Backraum und durch den Vorkopf bewegt. Somit entspricht die Hauptbewegungsrichtung der Backzangen größtenteils diesen Transportebenen. Ferner umfasst der Endlosförderer bevorzugt einen vorderen Umlenkpunkt und einen hinteren Umlenkpunkt. Der hintere Umlenkpunkt ist jener Bereich des Backraums, in dem der Endlosförderer umgelenkt, insbesondere um 180° umgelenkt wird, um wieder zurück Richtung Vorkopf geführt zu werden. Der vordere Umlenkpunkt liegt in der Regel im Vorkopf und entspricht jenem Bereich, in dem der Endlosförderer wiederum um 180° Richtung Backraum umgelenkt wird.

Im Vorkopf sind entlang der Förderrichtung der Backzangen nacheinander ein Öffenbereich zum Öffnen der Backzangen, ein Backproduktentnahmebereich zur Entnahme der gebackenen Produkte, ein Backmassenauftragsbereich zum Auftrag der Backmasse und ein Schließbereich zum Schließen der Backzangen vorgesehen. Die im Schließbereich geschlossenen Backzangen, die jeweils eine Backform bilden, werden in weiterer Folge durch eine Eintrittsöffnung in den Backraum befördert. Nach dem hinteren Umlenkpunkt werden die Backzangen bevorzugt wieder zurück Richtung Vorkopf transportiert, wo sie durch eine Austrittsöffnung aus dem Backraum austreten und gleichzeitig in den Vorkopf eintreten.

Gegebenenfalls mündet der Abzug im Bereich des Vorkopfs in den Backraum. Dies bedeutet, dass die Einmündung nahe dem Vorkopf angeordnet ist und insbesondere, dass sie entfernt vom hinteren Umlenkpunkt angeordnet ist. Dadurch kann die Konvektionsströmung, ausgehend von dem Konvektionsgebläse, nahezu den gesamten Backraum durchströmen bevor sie durch den Abzug austritt. Bevorzugt ist somit an einer Seite des Backraums das Konvektionsgebläse vorgesehen und an der anderen Seite der Abzug. Gegebenenfalls mündet der Abzug in den Ausdampfbereich des Backraums. Gegebenenfalls mündet der Abzug entfernt vom Ausdampfbereich in den Backraum.

Gegebenenfalls umfasst die Vorrichtung eine Steuerungs- und/oder Regelungsanordnung. Beispielsweise kann durch Regelung des Antriebs des Konvektionsgebläses die Konvektion im Backraum auf einen optimalen Wert geregelt werden. Beispielsweise kann dadurch die Backraumtemperatur geregelt werden. Beispielsweise kann dadurch die Abgastemperatur geregelt werden. Auch die Heizanordnung und insbesondere die Heizleistung der Heizanordnung kann von einer oder von der Regelungsanordnung geregelt bzw. gesteuert werden.

Ferner umfasst der erfindungsgemäße Backofen gegebenenfalls eine Luftaufbereitungsanordnung. Diese Luftaufbereitungsanordnung ist insbesondere dazu geeignet oder eingerichtet, die von dem Konvektionsgebläse einzubringende Luft aufzubereiten. Diese Aufbereitung kann beispielsweise eine Luftvorwärmung sein. Gegebenenfalls umfasst die Luftaufbereitung eine Luftfilterung, eine Luftentfeuchtung, eine Luftbefeuchtung und/oder eine Lufttemperierung. Auch die Luftaufbereitungsanordnung kann als Teil der Regelstrecke oder als Teil der Regelungsanordnung verwendet werden, um die Effizienz und die Backqualität zu verbessern.

Gegebenenfalls ist mindestens ein Sensor vorgesehen, dessen Daten oder Messgrößen als Eingangsgrößen der Regelungsanordnung oder zur Steuerung verwendet werden können. Gegebenenfalls ist ein Sensor zur Messung des Volumenstroms des durch das Konvektionsgebläse eingebrachten Konvektionsstroms vorgesehen. Gegebenenfalls wird durch die Regelungsanordnung die Temperatur der zugeführten Luft geregelt. Gegebenenfalls wird durch die Regelungsanordnung die Feuchte der zugeführten Luft geregelt. Gegebenenfalls sind mehrere Konvektionsgebläse vorgesehen, die an unterschiedlichen Stellen in den Backraum münden. Gegebenenfalls können die Konvektionsgebläse unabhängig voneinander geregelt und/oder gesteuert werden.

Über das Vorsehen von Temperatursensoren an einer gewünschten Stelle, beispielsweise im Bereich des Abzugs, im Bereich des Backraums oder im Bereich des Konvektionsgebläses, kann die Temperatur an diesen Stellen beispielsweise über Steuerung des Gebläses, über die Luftvorwärmung oder über die Luftfeuchte verändert oder von der Regelungsanordnung geregelt werden.

Gegebenenfalls ist in allen Ausführungsformen vorgesehen, dass das Konvektionsgebläse zur Zuführung von Frischluft eingerichtet ist. Insbesondere kann vorgesehen sein, dass die zugeführte Frischluft frei von Verbrennungsgasen oder Backraumgasen ist. Gegebenenfalls ist vorgesehen, dass das Konvektionsgebläse getrennt von der Heizanordnung und insbesondere beabstandet von der Heizanordnung in den Backraum mündet. Gegebenenfalls ist in allen Ausführungsformen vorgesehen, dass das Abzuggebläse geregelt und/oder gesteuert ist.

In weiterer Folge wird die Erfindung anhand der Figuren weiter beschrieben.
Fig. 1 zeigt eine schematische, geschnittene Seitenansicht einer Ausführungsform eines erfindungsgemäßen Backofens.
Fig. 2 zeigt eine schematische, geschnittene Seitenansicht einer weiteren Ausführungsform eines erfindungsgemäßen Backofens.

Wenn nicht anders angegeben, so entsprechen die Bezugszeichen folgenden Komponenten:
Endlosförderer 1, Backzange 2, Backmassenauftragsbereich 3, Schließbereich 4, Backraum 5, Öffenbereich 6, Backproduktentnahmebereich 7, Heizanordnung 8, hinterer Umlenkpunkt 9, vorderer Umlenkpunkt 10, Vorkopf 11, Wärmeisolierung 12, Eintrittsöffnung 13, Austrittsöffnung 14, Abzug 15, Konvektionsgebläse 16, Konvektionsströmung 17, Hauptbewegungsrichtung (der Backzangen) 18, Abzugsgebläse 19, Luftaufbereitungsanordnung 20, Sensor 21.

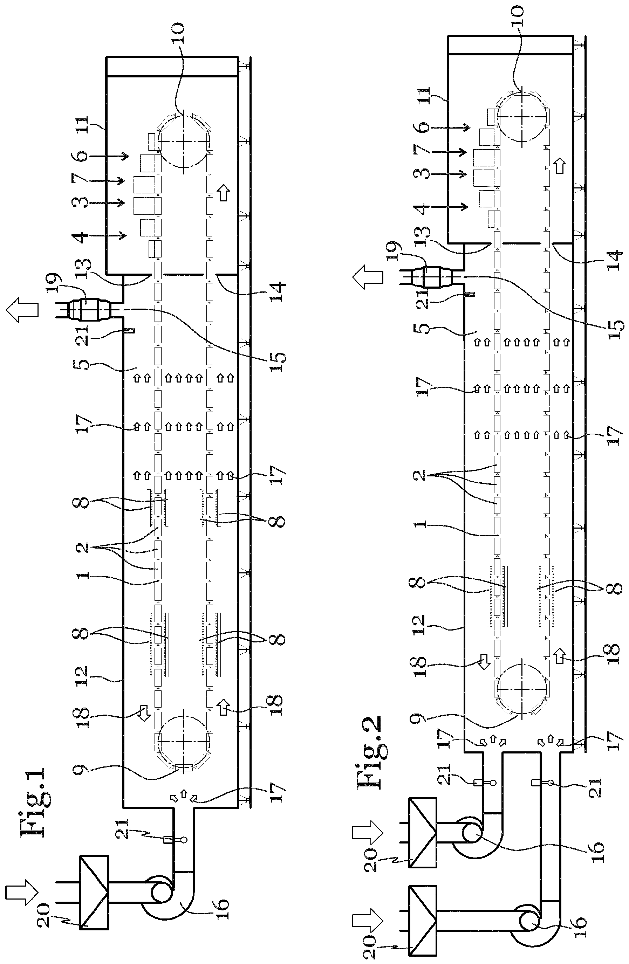

Fig. 1 zeigt eine schematische Seitenansicht einer Ausführungsform eines erfindungsgemäßen Backofens. Ein Endlosförderer 1 mit Backzangen 2 wird bevorzugt kontinuierlich durch einen Backraum 5 und durch einen Vorkopf 11 bewegt. Die an dem Endlosförderer 1 festgelegten oder festlegbaren Backzangen 2 sind öffnen- und schließbar ausgebildet. Zwischen den beiden Backplatten einer Backzange ist eine Backform gebildet, in der die Backmasse im Backraum gebacken wird.

Nach dem Passieren des Backraums wird die Backzange in den Vorkopf 11 befördert, wo sie in einem ersten Schritt in einem Öffenbereich 6 geöffnet wird. Aus der geöffneten Backzange 2 wird im nachfolgenden Produktentnahmebereich 7 das gebackene Produkt entnommen und abtransportiert. Im darauffolgenden Backmassenauftragsbereich 3 wird die Backzange 2 erneut mit einer Backmasse beschickt. Im darauffolgenden Schließbereich 4 wird die Backzange 2 wiederum geschlossen und in dieser geschlossenen Stellung durch den Backraum 5 befördert. Gegebenenfalls kann in allen Ausführungsformen eine Verriegelungsvorrichtung zur Verriegelung der Backzangen vorgesehen sein. Insbesondere für Waffelprodukte mit knusprig-spröder Konsistenz, die unter hohem Druck und hoher Temperatur ausgebacken werden, ist eine derartige Verriegelungsvorrichtung notwendig.

Nach dem Schließen der Backzange 2 wird die Backzange 2 entlang des Endlosförderers 1 durch eine Eintrittsöffnung 13 in den Backraum 5 befördert. Direkt nach dem Eintritt der Backzange 2 in den Backraum 5 durchfährt die Backzange 2 einen Ausdampfbereich. In diesem Ausdampfbereich werden große Teile der flüchtigen Bestandteile der Backmasse ausgedampft, womit in diesem Bereich ein hoher gasförmiger Volumenstrom aus der Backzange austritt. Bevorzugt mündet in allen Ausführungsformen der Abzug 15 in diesen Ausdampfbereich des Backraums 5, sodass die aus der Backzange 2 austretenden flüchtigen Bestandteile gleich vom Abzug 15 abtransportiert werden können. Insbesondere umfasst der Abzug 15 ein Abzuggebläse 19, das das heiße Backraumgas aus dem Backraum 5 absaugen kann.

Der Backraum 5 ist bevorzugt mit einer Wärmeisolierung 12 versehen. Diese Wärmeisolierung 12 kann in allen Ausführungsformen den Backraum im Wesentlichen vollständig umhüllen, sodass die Wirkung der Wärmeisolierung 12 optimiert ist. Die Backraumwände und insbesondere auch die Wärmeisolierung 12 umfassen jedoch Ein- und Austrittsöffnungen im notwendigen Ausmaß. Insbesondere müssen die Backzangen 2 durch die Austrittsöffnung 14 austreten und durch die Eintrittsöffnung 13 eintreten können. Auch der Ausgang des Konvektionsgebläses 16 tritt durch die Wand des Backraums und somit auch durch die Wärmeisolierung 12 in den Backraum 5 ein.

Gegebenenfalls sind weitere Öffnungen vorgesehen, um die Heizanordnung 8 mit Brennstoff zu versorgen. Die Heizanordnungen 8 können in allen Ausführungsformen bevorzugt Strahlungsheizungsvorrichtungen, wie beispielsweise Drahtgewebebrenner oder Porenbrenner umfassen oder sein. Gegebenenfalls sind herkömmliche Brenner mit Strahlungsheizvorrichtungen kombiniert. Gegebenenfalls sind ausschließlich Strahlungsheizvorrichtungen vorgesehen. Derartige Strahlungsheizvorrichtungen werden bevorzugt mit einem vorgemischten Gas-Luft-Gemisch betrieben. Dieses Gas-Luft-Gemisch wird bevorzugt in einem porösen Körper, wie beispielsweise in einem Metallschaum, einem Keramikschaum oder in einem Drahtgewebe verbrannt. In allen Ausführungsformen kann die Heizanordnung 8 zwischen dem Abzug 15 und dem hinteren Umlenkpunkt 9 des Endlosförderers vorgesehen sein. Beispielsweise kann die Heizanordnung 8 im hinteren Drittel des Backraums 5, in der hinteren Hälfte des Backraums 5 oder in einem Großteil des Backraums 5 angeordnet sein. Als "hinten" wird bei dem Backofen 5 in allen Ausführungsformen jener Teil bezeichnet, der im Bereich des hinteren Umlenkpunkts 9 angeordnet ist. Der vordere Bereich des Backofens ist insbesondere der Bereich des Vorkopfs 11 und gegebenenfalls der Bereich in dem auch der vordere Umlenkpunkt 10 angeordnet ist.

Der vordere Umlenkpunkt 10 und der hintere Umlenkpunkt 9 entsprechen jenen Bereichen des Endlosförderers, in denen er umgelenkt wird. Die Umlenkung geschieht beispielsweise über Räder, Drehgestelle, Walzen oder ähnliches.

Erfindungsgemäß ist ein Konvektionsgebläse 16 vorgesehen. Dieses Konvektionsgebläse 16 ist insbesondere als Luftgebläse ausgebildet und erzeugt durch die Einbringung von Luft eine künstliche Konvektionsströmung 17, die den Backraum 5 durchströmt.

Gemäß Fig. 1 mündet das Konvektionsgebläse 16 durch die hintere Stirnwand des Backraums 5 oder des Backofens und insbesondere im Bereich des hinteren Umlenkpunktes 9 in den Backraum 5. Die Konvektionsströmung 17 kann in allen Ausführungsformen im Wesentlichen der Hauptbewegungsrichtung 18 der Backzangen 2 folgen, wobei gegebenenfalls die Backzangen gegen die Konvektionsströmung 17 oder mit der Konvektionsströmung 17 bewegt werden. Insbesondere verläuft die Konvektionsströmung 17 im Wesentlichen waagrecht durch den Backraum 5. Um eine vollständige und gleichmäßige Durchströmung des Backraums 5 zu erzielen, ist der Abzug 15 bevorzugt auf einer Seite des Backraums 5 angeordnet und die Einmündung des Konvektionsgebläses 16 auf der anderen Seite.

In allen Ausführungsformen kann eine Luftaufbereitungsanordnung 20 vorgesehen sein.

Diese Luftaufbereitungsanordnung 20 kann beispielsweise eine

Luftvorwärmvorrichtung, eine Luftfiltervorrichtung, eine Luftentfeuchtungsvorrichtung oder eine Luftbefeuchtungsvorrichtung sein. Gegebenenfalls kommen auch mehrere der genannten Möglichkeiten zur Luftaufbereitung gemeinsam oder nacheinander zum Einsatz.

Gegebenenfalls ist ein Sensor 21 oder sind mehrere Sensoren 21 vorgesehen. Als Sensoren 21 kommen beispielsweise ein Temperatursensor, ein Luftmassenmesser, ein Volumenstrommessgerät und/oder ein Feuchtigkeitsmesser zum Einsatz. Die Daten dieser Sensoren 21 können beispielsweise verwendet werden, um eine optimale Regelung oder Steuerung des Backofens zu bewirken.

Beispielsweise kann ein Temperatursensor im Bereich des Abzugs 15 vorgesehen sein, um die Abgastemperatur der abgesaugten Backraumgase zu regeln. Beispielsweise kann auch die Backraumtemperatur gemessen werden, um geregelt zu werden. Gegebenenfalls kann zur Veränderung der Backraumtemperatur der von dem Konvektionsgebläse 16 erzeugte Luftstrom oder die Leistung des Konvektionsgebläses verändert werden. Gegebenenfalls kann die Backraumtemperatur auch durch Veränderung der Feuchtigkeit der eingebrachten Luft verändert werden.

Gegebenenfalls wird zur Regelung der Backraumtemperatur oder anderer Temperaturen die Luft in der Luftaufbereitungsanordnung 20 vorgewärmt.

Auch die Veränderung der Heizleistung der Heizanordnung 8 kann zur Regelung der optimalen Backparameter einbezogen werden.

Fig. 2 zeigt eine weitere Ausführungsform eines erfindungsgemäßen Backofens in einer schematischen Seitenansicht. Die Elemente der Ausführungsform der Fig. 2 entsprechen jenen der Fig. 1. Im Unterschied zur Ausführungsform der Fig. 1 sind in der Ausführungsform der Fig. 2 zwei Konvektionsgebläse 16 vorgesehen. Diese Konvektionsgebläse 16 münden an unterschiedlichen Stellen in den Backraum 5.

Bevorzugt münden beide Konvektionsgebläse 16 im Bereich des hinteren Umlenkpunktes 9 oder durch die hintere Stirnseite des Backraums 5 in den Backraum 5. Bevorzugt münden die beiden Gebläse übereinander in den Backraum 5. Gegebenenfalls können die beiden Konvektionsgebläse 16 unabhängig voneinander gesteuert und/oder geregelt werden.

Gegebenenfalls umfasst in allen Ausführungsformen jedes der Konvektionsgebläse 16 eine eigene Luftaufbereitungsanordnung 20. Auch diese Luftaufbereitungsanordnungen 20 können unterschiedlich oder gleich ausgeführt sein bzw. unabhängig voneinander gesteuert und/oder geregelt werden.

## Patentansprüche

1. Backofen zum Herstellen gebackener, bevorzugt essbarer, Produkte, umfassend:
mehrere entlang einem Endlosförderer (1) vorgesehene öffenbare und schließbare Backzangen (2), die aneinandergereiht jeweils nacheinander:
- einen Backmassenauftragsbereich (3) zum Auftrag einer Backmasse auf eine geöffnete Backzange (2),
- einen Schließbereich (4) zum Schließen der Backzangen (2),
- einen Backraum (5) zum Backen der Backprodukte in den geschlossenen Backzangen (2), in dem mindestens eine Heizanordnung (8) zur Beheizung der im Backraum (5) befindlichen Backzangen (2) vorgesehen ist,
- einen Öffenbereich (6) zum Öffnen der Backzangen (2)
- und einen Backproduktentnahmebereich (7) zur Entnahme der gebackenen Produkte aus den geöffneten Backzangen (2) durchlaufen,
wobei der Endlosförderer (1) und die Backzangen (2) an einem im Backraum (5) angeordneten hinteren Umlenkpunkt (9) und an einem entfernt vom Backraum (5) in einem Vorkopf (11) angeordneten vorderen Umlenkpunkt (10) umgelenkt sind, wobei der Backraum (5) als im Wesentlichen geschlossener Backraum (5) mit einer Wärmeisolierung (12) ausgebildet ist, der eine Eintrittsöffnung (13) zum Eintritt der Backzangen (2), eine Austrittsöffnung (14) zum Austritt der Backzangen (2) und einen Abzug (15) zur Abführung der Backraumgase umfasst, wobei mindestens ein Konvektionsgebläse (16) vorgesehen ist, das entfernt vom Abzug (15) in den Backraum (5) mündet,
**dadurch gekennzeichnet,**
- **dass** das Konvektionsgebläse (16) ein Luftgebläse ist, über das zur Erzeugung künstlicher Konvektion gesteuert oder geregelt Sekundärluft in den Backraum (5) einbringbar oder eingebracht ist,
- **dass** entlang der Konvektionsströmung (17) des Konvektionsgebläses (16) zuerst die Einmündung des Konvektionsgebläses (16) in den Backraum, dann ein Bereich des Backraums (5), in dem die oder eine Heizanordnung (8) vorgesehen ist, und dann der Abzug (15) durchströmt werden,
- **dass** die Konvektionsströmung (17) im Backraum (5) entlang einer Hauptbewegungsrichtung (18) der Backzangen (2) und insbesondere im Wesentlichen waagrecht verläuft, bevor sie aus dem Abzug (15) austritt,
- und **dass** der Abzug (15), entlang der Hauptbewegungsrichtung (18) der Backzangen (2) gesehen, entfernt vom hinteren Umlenkpunkt (9) auf der anderen Seite des Backraums (5) und insbesondere nahe dem Vorkopf (11) in den Backraum (5) mündet.

2. Backofen nach Anspruch 1, **dadurch gekennzeichnet, dass** über das Konvektionsgebläse (16) ausschließlich Sekundärluft in den Backraum (5) einbringbar oder eingebracht ist.

3. Backofen nach Anspruch 1 oder 2, **dadurch gekennzeichnet,**
- **dass** das Konvektionsgebläse (16) und dessen Konvektionsströmung (17) im Bereich des hinteren Umlenkpunktes (9) oder durch die hintere Stirnwand des Backraums in den Backraum (5) mündet,
- oder dass zwischen dem Bereich des Backraums (5), in dem die oder eine Heizanordnung (8) vorgesehen ist, und dem Abzug (15) ein Konvektionsbereich vorgesehen ist, in dem keine Heizanordnung (8) vorgesehen ist.

4. Backofen nach einem der Ansprüche 1 bis 3, **dadurch gekennzeichnet, dass** die Heizanordnung (8) eine Strahlungsheizvorrichtung enthält oder ist, wobei die Strahlungsheizvorrichtung insbesondere ein Drahtgewebebrenner oder ein Porenbrenner ist.

5. Backofen nach einem der Ansprüche 1 bis 4, **dadurch gekennzeichnet, dass** die Heizanordnung (8) eine Strahlungsheizvorrichtung enthält oder ist, wobei die Strahlungsheizvorrichtung insbesondere ein Drahtgewebebrenner oder ein Porenbrenner ist,
und dass die Strahlungsheizvorrichtung einen Verbrennungsbereich zur Verbrennung eines vorgemischten Luft-Brennstoff-Gemisches umfasst, wobei die Luft des Luft-Brennstoff-Gemisches insbesondere die Primärluft zur Verbrennung des Brennstoffs ist.

6. Backofen nach einem der Ansprüche 1 bis 5, **dadurch gekennzeichnet, dass** ein Abzuggebläse (19) zur Absaugung des Backraumgases durch den Abzug (15) vorgesehen ist.

7. Backofen nach einem der Ansprüche 1 bis 6, **dadurch gekennzeichnet, dass** zwei oder mehr Konvektionsgebläse (16) vorgesehen sind, die getrennt voneinander an unterschiedlichen Stellen in den Backraum (5) münden.

8. Backofen nach einem der Ansprüche 1 bis 7, **dadurch gekennzeichnet, dass** zwei oder mehr Konvektionsgebläse (16) vorgesehen sind, die getrennt voneinander an unterschiedlichen Stellen in den Backraum (5) münden,
und die insbesondere im Bereich des hinteren Umlenkpunktes (9) oder durch die hintere Stirnwand des Backraums (5) in den Backraum (5) münden,
oder dass entlang der Konvektionsströmung (17) der Konvektionsgebläse (16) zuerst die Einmündungen der Konvektionsgebläse (16) in den Backraum, dann ein Bereich des Backraums (5), in dem die oder eine Heizanordnung (8) vorgesehen ist, und dann der Abzug (15) durchströmt werden,
wobei zwischen dem Bereich des Backraums (5), in dem die oder eine Heizanordnung (8) vorgesehen ist, und dem Abzug (15) ein Konvektionsbereich vorgesehen ist, in dem keine Heizanordnung (8) vorgesehen ist.

9. Backofen nach einem der Ansprüche 1 bis 8, **dadurch gekennzeichnet, dass** eine Luftaufbereitungsanordnung (20) vorgesehen ist, die eine Luftvorwärmung, eine Luftfilterung, eine Luftbefeuchtung und/oder eine Luftentfeuchtung umfasst.

10. Backofen nach einem der Ansprüche 1 bis 9, **dadurch gekennzeichnet, dass** eine Regelungsanordnung zur Regelung der Temperatur der zugeführten Luft, zur Regelung der Temperatur der abgeführten Backraumgase, zur Regelung der Backraumfeuchtigkeit und/oder zur Regelung der Backraumtemperatur vorgesehen ist.

11. Backofen nach einem der Ansprüche 1 bis 10, **dadurch gekennzeichnet, dass** eine Regelungsanordnung oder eine Steuerungsanordnung zur Regelung oder Steuerung des Volumenstroms des oder der Konvektionsgebläse(s) (16) vorgesehen ist.

12. Backofen nach einem der Ansprüche 1 bis 11, **dadurch gekennzeichnet, dass** eine Regelungsanordnung oder eine Steuerungsanordnung zur Regelung oder Steuerung der Heizleistung der Heizanordnung (8) vorgesehen ist.

13. Backofen nach einem der Ansprüche 1 bis 12, **dadurch gekennzeichnet, dass** eine Regelungsanordnung vorgesehen ist, und dass die Regelungsanordnung mindestens einen Sensor (21), wie insbesondere einen Temperatursensor, einen Drucksensor, einen Feuchtigkeitssensor und/oder einen Sensor zur Bestimmung eines Volumenstroms der Konvektionsströmung (17) des Konvektionsgebläses oder der Konvektionsgebläse umfasst.

14. Backofen nach einem der Ansprüche 1 bis 13, **dadurch gekennzeichnet, dass** zwei oder mehr Konvektionsgebläse (16) vorgesehen sind, die getrennt voneinander an unterschiedlichen Stellen in den Backraum (5) münden, und dass die Konvektionsgebläse (16) getrennt steuerbar oder getrennt regelbar sind.

## Claims

1. An oven for producing baked, preferably edible, products, comprising: multiple openable and closable baking moulds (2) arranged in series on an endless conveyor (1), which proceed one after another through:
- a baking-mass application area (3) for applying the baking filling onto an opened baking mould (2) ;
- a closing area (4) for closing the baking moulds (2) ;
- a baking chamber (5) for baking the baked products inside the closed baking moulds (2), wherein at least one heating arrangement (8) is provided for heating the baking moulds (2) located inside the baking chamber (5);
- an opening area (6) for opening the baking moulds (2) ;
- and a baking-product removal area (7) for removing the baked products from the opened baking moulds (2);
wherein the endless conveyor (1) and the baking moulds (2) are diverted at a diversion point (10) arranged at a remove from the baking chamber (5) in a front head (11), wherein the baking chamber (5) is designed as an essentially closed baking chamber (5) with a thermal insulation (12), said baking chamber (5) comprising an entry opening (13) for the entry of the baking moulds (2), an exit opening (14) for the exit of the baking moulds (2), and a flue (15) for an extraction of the baking chamber gases, wherein at least one convection blower (16) is provided, which opens onto the baking chamber (5) at a remote from the flue (15);
**characterized in that**
- the convection blower (16) is an air blower, via which secondary air can be or is introduced into the baking chamber (5) in a controlled or regulated manner for generating artificial convection,
- the convection current (17) of the convection blower (16) first flows through the opening of the convection blower (16) onto the baking chamber, then through an area of the baking chamber (5) in which the or a heating arrangement (8) is provided, and then into the flue (15),
- inside the baking chamber (5), the convection current (17) flows along a main direction of movement (18) of the baking moulds (2) and in particular in an essentially horizontal direction before it exits through the flue (15),
- and the flue (15) opens onto the baking chamber at a remove from the rear diversion point (9) on the other side of the baking chamber (5) as seen in the main direction of movement (18) of the baking moulds (2), and in particular that it opens onto the baking chamber (5) near the front head (11).

2. The oven according to Claim 1, **characterized in that** only secondary air can be or is introduced into the baking chamber (5) via the convection blower (16).

3. The oven according to Claim 1 or 2, **characterized in that**
- the convection blower (16) and its convection current (17) opens onto the baking chamber (5) in the area of the rear diversion point (9) or through the rear end wall of the baking chamber (5),
- or a convection area without a heating arrangement (8) is provided in between the area of the baking chamber (5), in which the or a heating arrangement (8) is provided, and the flue (15) .

4. The oven according to one of Claims 1 to 3, **characterized in that** the heating arrangement (8) includes or is a radiant heating arrangement, wherein the radiant heating arrangement in particular is a wire mesh burner or a porous burner.

5. The oven according to one of Claims 1 to 4, **characterized in that** the heating arrangement (8) includes or is a radiant heating arrangement, wherein the radiant heating arrangement in particular is a wire mesh burner or a porous burner, and the radiant heating arrangement comprises a combustion area for combusting a pre-mixed air-fuel mix, wherein the air of the air-fuel mix in particular is the primary air for combusting the fuel.

6. The oven according to one of Claims 1 to 5, **characterized in that** an exhaust blower (19) is provided for extracting the baking chamber gas through the flue (15).

7. The oven according to one of Claims 1 to 6, **characterized in that** two or more convection blowers (16) are provided, which open onto the baking chamber (5) separate from each other at different locations.

8. The oven according to one of Claims 1 to 7, **characterized in that** two or more convection blowers (16) are provided, which open onto the baking chamber (5) separate from each other at different locations and which in particular open onto the baking chamber (5) in the area of the rear diversion point (9) or through the rear end wall of the baking chamber (5), or the convection currents (17) of the convection blowers (16) first flow through the openings of the convection blowers (16) onto the baking chamber, then through an area of the baking chamber (5) in which the or a heating arrangement (8) is provided, and then into the flue (15), wherein a convection area without a heating arrangement (8) is provided in between the area of the baking chamber (5), in which the or a heating arrangement (8) is provided, and the flue (15) .

9. The oven according to one of Claims 1 to 8, **characterized in that** an air treatment arrangement (20) is provided, which comprises pre-heating, filtering, humidifying and/or dehumidifying of the air.

10. The oven according to one of Claims 1 to 9, **characterized in that** a regulation arrangement is provided for regulating the temperature of the incoming air, for regulating the temperature of the extracted baking chamber gases, for regulating the baking chamber humidity and/or for regulating the baking chamber temperature.

11. The oven according to one of Claims 1 to 10, **characterized in that** a regulation arrangement or control arrangement is provided for regulating or controlling the flow rate of the convection blower(s) (16) .

12. The oven according to one of Claims 1 to 11, **characterized in that** a regulation arrangement or control arrangement is provided for regulating or controlling the heating output of the heating arrangement (8).

13. The oven according to one of Claims 1 to 12, **characterized in that** a regulation arrangement is provided and that the regulation arrangement comprises at least one sensor (21), such as in particular a temperature sensor, a pressure sensor, a humidity sensor and/or a sensor for determining a flow rate of the convection current (17) of the convection blower or convection blowers.

14. The oven according to one of Claims 1 to 13, **characterized in that** two or more convection blowers (16) are provided, which open onto the baking chamber (5) separate from each other at different locations, and that the convection blowers (16) can be controlled separately or regulated separately.

## Revendications

1. Four, destiné à confectionner des produits cuits au four, de préférence comestibles, comprenant :
plusieurs pinces de cuisson (2) susceptibles de s'ouvrir et de se fermer, prévues le long d'un convoyeur continu (1) qui en rangées, traversent chaque fois successivement :
- une zone d'application de composition boulangère (3), destinée à appliquer une composition boulangère sur une pince de cuisson (2) ouverte,
- une zone de fermeture (4), destinée à la fermeture des pinces de cuisson (2),
- un espace de cuisson (5), destiné à cuire au four les produits boulangers dans les pinces de cuisson (2) fermées, dans lequel est prévu au moins un agencement de chauffage (8), destiné à chauffer les pinces de cuisson (2) se trouvant dans l'espace de cuisson (5),
- une zone d'ouverture (6), destinée à l'ouverture des pinces de cuisson (2)
- et une zone de retrait des produits boulangers (7), destinée au retrait des produits cuits au four hors des pinces de cuisson (2) ouvertes,
le convoyeur continu (1) et les pinces de cuisson (2) étant renvoyés sur un point de renvoi arrière (9) placé dans l'espace de cuisson (5) et sur un point de renvoi avant (10), placé à distance de l'espace de cuisson (5) dans une avant-tête (11), l'espace de cuisson (5) étant conçu sous la forme d'un espace de cuisson (5) sensiblement clos, pourvu d'une isolation thermique (12) qui comprend une ouverture d'entrée (13), destinée à l'entrée des pinces de cuisson (2), une ouverture de sortie (14) destinée à la sortie des pinces de cuisson (2) et une hotte (15), destinée à évacuer les gaz de l'espace de cuisson, au moins une soufflante à convection (16) étant prévue, qui débouche à distance de la hotte (15) dans l'espace de cuisson (5),
**caractérisé**
- **en ce que** la soufflante à convection (16) est une soufflante d'air par l'intermédiaire de laquelle, pour créer une convection artificielle, de l'air secondaire est susceptible d'être introduit ou est introduit de manière commandée ou régulée dans l'espace de cuisson (5),
- **en ce que** le long du courant de convection (17) de la soufflante à convection (16), d'abord l'embouchure de la soufflante à convection (16) dans l'espace de cuisson, ensuite une zone de l'espace de cuisson (5), dans laquelle est prévu le ou un agencement de chauffage (8) et ensuite la hotte (15) sont traversées,
- **en ce que** le courant de convection (17) dans l'espace de cuisson (5) s'écoule le long d'une direction de déplacement principale (18) des pinces de cuisson (2) et notamment sensiblement à l'horizontale, avant de sortir de la hotte (15),
- et **en ce que**, vue le long de la direction de déplacement principale (18) des pinces de cuisson (2), la hotte (15), débouche dans l'espace de cuisson (5) à distance du point de renvoi arrière (9) sur l'autre côté de l'espace de cuisson (5) et notamment à proximité de l'avant-tête (11).

2. Four selon la revendication 1, **caractérisé en ce que** par l'intermédiaire de la soufflante à convection (16), exclusivement de l'air secondaire est susceptible d'être introduit ou est introduit dans l'espace de cuisson (5).

3. Four selon la revendication 1 ou 2, **caractérisé**
- **en ce que** la soufflante à convection (16) et son courant de convection (17) débouchent dans l'espace de cuisson (5) dans la zone du point de renvoi arrière (9) ou à travers la paroi frontale arrière de l'espace de cuisson,
- ou en ce qu'entre la zone de l'espace de cuisson (5) dans laquelle est prévu le ou un agencement de chauffage (8) et la hotte (15) est prévue une zone de convection, dans laquelle n'est prévu aucun agencement de chauffage (8).

4. Four selon l'une quelconque des revendications 1 à 3, **caractérisé en ce que** l'agencement de chauffage (8) contient ou est un dispositif de chauffage radiant, le dispositif de chauffage radiant étant notamment un brûleur en maillage métallique ou un brûleur poreux.

5. Four selon l'une quelconque des revendications 1 à 4, **caractérisé en ce que** l'agencement de chauffage (8) contient ou est un dispositif de chauffage radiant, le dispositif de chauffage radiant étant notamment un brûleur en maillage métallique ou un brûleur poreux, et **en ce que** le dispositif de chauffage radiant comprend une zone de combustion, destinée à la combustion d'un mélange combustible/air pré-mélangé, l'air du mélange combustible/air pré-mélangé étant notamment l'air primaire destiné à la combustion du combustible.

6. Four selon l'une quelconque des revendications 1 à 5, **caractérisé en ce qu'**une soufflante de hotte (19) est prévue pour aspirer le gaz de l'espace de cuisson à travers la hotte (15).

7. Four selon l'une quelconque des revendications 1 à 6, **caractérisé en ce que** deux soufflantes à convection (16) ou plus sont prévues, qui débouchent, séparément les unes des autres en différents endroits dans l'espace de cuisson (5).

8. Four selon l'une quelconque des revendications 1 à 7, **caractérisé en ce que** deux soufflantes à convection (16) ou plus sont prévues, qui débouchent, séparément les unes des autres en différents endroits dans l'espace de cuisson (5),
et qui débouchent dans l'espace de cuisson (5) notamment dans la zone du point de renvoi arrière (9) ou à travers la paroi frontale arrière de l'espace de cuisson (5),
ou **en ce que** le long du courant de convection (17) de la soufflante à convection (16), d'abord les embouchures de la soufflante à convection (16) dans l'espace de cuisson, ensuite une zone de l'espace de cuisson (5) dans laquelle est prévu le ou un agencement de chauffage (8) et ensuite la hotte (15) sont traversées,
entre la zone de l'espace de cuisson (5), dans laquelle est prévu le ou un agencement de chauffage (8) et la hotte (15) est prévue une zone de convection dans laquelle n'est prévu aucun agencement de chauffage (8).

9. Four selon l'une quelconque des revendications 1 à 8, **caractérisé en ce qu'**il est prévu un agencement de traitement de l'air (20) qui comprend un préchauffage de l'air, un filtrage de l'air, une humidification de l'air et/ou une déshumidification de l'air.

10. Four selon l'une quelconque des revendications 1 à 9, **caractérisé en ce qu'**il est prévu un agencement de régulation, destiné à réguler la température de l'air amené, à réguler la température des gaz évacués hors de l'espace de cuisson, à réguler l'humidité dans l'espace de cuisson et/ou à réguler la température dans l'espace de cuisson.

11. Four selon l'une quelconque des revendications 1 à 10, **caractérisé en ce qu'**il est prévu un agencement de régulation ou un agencement de commande, destiné à réguler ou à commander le débit volumétrique de la ou des soufflante(s) à convection (16).

12. Four selon l'une quelconque des revendications 1 à 11, **caractérisé en ce qu'**il est prévu un agencement de régulation ou un agencement de commande, destiné à réguler ou à commander la puissance de chauffe de l'agencement de chauffage (8).

13. Four selon l'une quelconque des revendications 1 à 12, **caractérisé en ce qu'**il est prévu un agencement de régulation et **en ce que** l'agencement de régulation comprend au moins un capteur (21), comme notamment un capteur thermique, un capteur de pression, un capteur d'humidité et/ou un capteur destiné à déterminer un débit volumétrique du courant de convection (17) de la soufflante à convection ou des soufflantes à convection.

14. Four selon l'une quelconque des revendications 1 à 13, **caractérisé en ce que** deux soufflantes à convection (16) ou plus sont prévues, qui séparément les unes des autres débouchent en différents endroits dans l'espace de cuisson (5) et **en ce que** les soufflantes à convection (16) sont susceptibles d'être commandées séparément ou régulées séparément.
